# EUROPEAN PATENT SPECIFICATION

(11) **EP 2 685 651 B1**
(45) Date of publication and mention of the grant of the patent: **09.03.2016**
(21) Application number: 11868422.4
(22) Date of filing: 08.12.2011
(51) Int. Cl.: H04J 14/02, H04B 10/25

(54) **WAVELENGTH SERVICE INFORMATION NOTIFICATION METHOD, DEVICE AND SYSTEM**
VERFAHREN, VORRICHTUNG UND SYSTEM ZUR ÜBERMITTLUNG VON WELLENLÄNGENDIENSTINFORMATIONEN
PROCÉDÉ, DISPOSITIF ET SYSTÈME DE NOTIFICATION D'INFORMATIONS DE SERVICE DE LONGUEUR D'ONDE

(43) Date of publication of application: 15.01.2014
(73) Proprietor: Huawei Technologies Co., Ltd., Longgang District Shenzhen, Guangdong 518129 (CN)
(72) Inventor: CHEN, Chunhui, Shenzhen Guangdong 518129 (CN); ZHENG, Yu, Shenzhen Guangdong 518129 (CN)
(74) Representative: Gill Jennings & Every LLP
(86) International application number: PCT/CN2011/083676
(87) International publication number: WO 2013/082778

(56) References cited:
- EP-A1- 1 936 911
- EP-A2- 1 335 627
- CN-A- 101 227 248
- CN-A- 101 459 468
- CN-A- 101 820 556
- CN-A- 102 158 300
- US-A1- 2004 151 497
- US-A1- 2009 060 505

## Description

### FIELD OF THE INVENTION

The present invention relates to the field of optical communication technologies, and in particular, to a method, device and system for notifying wavelength, service information.

### BACKGROUND OF THE INVENTION

In an optical communication system, when an existing service is transmitted in a network, an electrical signal of the existing service is modulated to an optical signal by a site at a certain signal rate and according to a certain modulation code pattern, where the optical signal is borne on a light wavelength for transmission, and by using a DWDM (Dense Wavelength Division Multiplexing, dense wavelength division multiplexing) technology, multiplex transmission of multiple services, that is, multiple channels of optical signals with different frequencies, is implemented on one optical fiber. When wavelength service information, that is, light wavelengths, signal rates and modulation code patterns, of multiple existing services is different, the optical signals affect each other if a light wavelength interval of carriers of the existing services is small, thereby causing degradation of transmission performance or service impairment. Therefore, when a path is selected for a new service, a wavelength path with a proper wavelength interval should be selected according to the wavelength service information of the existing services. Therefore, in an optical network system, if services with different rates and code patterns need to be transmitted in one network, wavelength service information of an existing service transmitted by each site needs to be known when planning or provisioning of a wavelength path of a service is performed.

An ASON (Automatically Switched Optical Network, automatically switched optical network) network exists in the prior art, where a control plane is introduced into a conventional optical network. Based on the introduction of the control plane, the System notifies wavelength service information in two forms. One is that when a wavelength path is provisioned by the control plane, the wavelength service information may be carried in a control plane protocol packet and notified to each site on the path, and each site stores the wavelength service information. The other is that when a wavelength path is provisioned manually and statically in a conventional service, because the wavelength path is provisioned by manual setting but not the control plane, the wavelength service information cannot be carried to each intermediate site through the control plane protocol packet, and the wavelength service information can be stored at each site on the wavelength path only by manual setting: after each site on the wavelength service path stores wavelength service information of an existing service transmitted by the site itself, the wavelength service information may be flooded to another site in the network system through a routing protocol, so that the optical network system knows wavelength service information of a wavelength service transmitted by each site, and further a routing algorithm module may avoid a path having an effect on the existing service or the new service when planning and selecting a path for a new wavelength.

The prior art has the following disadvantages: The foregoing two forms for provisioning the wavelength path unavoidably coexist in an actual network, and when the wavelength path is provisioned manually and statically, each site on the wavelength path obtains and stores the wavelength service information by manual setting, thereby resulting in a high labor cost and a high error rate.

US 2009/060505 A1 discloses an apparatus which comprises a first node configured to communicate with a second node to generate a wavelength assignment, wherein the first node is configured to send a wavelength availability information to the second node. Included is a network component comprising at least one processor configured to implement a method, comprising receiving a wavelength availability information, and updating the wavelength availability information using a local wavelength availability information. Also included is a method, comprising acquiring a local wavelength assignment information, calculating a local wavelength availability information, and transmitting the local wavelength availability information to a subsequent network element on a lightpath.

EP 1335627 A2 discloses an optical network which includes links and nodes. In each node, a control section sets an optical path to be used for optical transport. A switching section performs switching of the optical path. In the control section, a link observation section observes the wavelength of signal light that is being transmitted through a link connected to the node as the utilization of the link. A flooding section notifies each of the remaining nodes of the link utilization and acquires a link utilization observed by each of the remaining nodes so as to share the link utilization between the nodes. An optical path calculation section selects the optical path to be used for optical transport by calculation using the link utilization observed by the link observation section and the link utilization observed by each of the remaining nodes. An optical path setting section sets the optical path selected by the optical path calculation section to the optical path to be used for optical transport.
EP 1936911 A1 discloses a method of establishing network connection service in the automatically exchanging optical network, includes: the source end user side sends the request for establishing the network connection service to the sink end user side; the network access node of the network connection service and the network output node of the network connection service negotiate to determine the network connection for supporting the network connection service and the protocol adaption stack from the user side to the network side in the network connection service by the message interaction of the control panel; the network access node and the network output node of the network establish the network connection supporting the network connection service and the adaption stack and finish the establishment of the network connection service. Further, a device and automatically exchanging optical network realizes the establishment of the network connection service. The invention need not configure manually and can reduce the delay of establishing the connection, and it is beneficial to the transmission of multiple service in the case of multiple service transmission network.

### SUMMARY OF THE INVENTION

Embodiments of the present invention provide a method for notifying wavelength service information, which enables each site on a manually and statically provisioned wavelength path to automatically obtain and store wavelength service information of a transmitted wavelength service, thereby saving a labor cost and achieving a low error rate.

In order to achieve the foregoing objectives, the embodiments of the present invention adopt the following technical solutions.

A method for notifying wavelength, service information includes:
obtaining and storing wavelength service information of an existing service at an optical cross source after connecting the optical cross source and an optical cross sink according to optical cross-connection information of the existing service, where the wavelength service information includes a light wavelength, a signal rate and a modulation code pattern:
transferring the wavelength service information from the optical cross source to the optical cross sink according to the optical cross-connection information; and
inserting, at the optical cross sink, the wavelength services information into a link management protocol message and sending the link management protocol message to a receiving site, so that the receiving site stores the wavelength service information, in order to select a wavelength path for a new service according to the light wavelength, the signal rate and the modulation code pattern that are in the wavelength service information.

A site includes:
a storing unit, configured to obtain and store wavelength service information of an existing service at an optical cross source after connecting the optical cross source and an optical cross sink according to optical cross-connection information of the existing service, where the wavelength service information includes a light wavelength, a signal rate and a modulation code pattern:
an optical cross transferring unit, configured to transfer the wavelength service information from the optical cross source to the optical cross sink according to the optical cross-connection information; and
a sending unit, configured to insert, at the optical cross sink, the wavelength service information into a link management protocol message and send the link management protocol message to a receiving site, so that the receiving site receives and stores the wavelength service information, in order to select a wavelength path for a new service according to the light wavelength, the signal rate and the modulation code pattern that are in the wavelength service information.

A system for notifying wavelength service information includes: a site and a receiving site, where
the site the site is configured to obtain and store wavelength service information of an existing service at an optical cross source after connecting the optical cross source and an optical cross sink according to optical cross-connection information of the existing service, then transfer the wavelength service information from the optical cross source to the optical cross sink according to the optical cross-connection information, and insert, at the optical cross sink, the wavelength service information into a link management protocol message and send the link management protocol message to the receiving site; and

the receiving site is configured to receive and store the wavelength service information.

The embodiments of the present invention provide the method, device and system for notifying wavelength service information. The site obtains and stores the wavelength service information of the existing service at the optical cross source after connecting the optical cross source and the optical cross sink according to the optical cross-connection information of the existing service, and then transfers the wavelength service information from the optical cross source to the optical cross sink according to the optical cross-connection information, and inserts, at the optical cross sink, the wavelength service information into the link management protocol message and sends the link management protocol message to the receiving site, so that the receiving site stores the wavelength service information, in order to select the wavelength path for the new service according to the light wavelength, the signal rate and the modulation code pattern that are in the wavelength service information. In this way, each site on the wavelength path may automatically obtain the wavelength service information of the transmitted wavelength service, thereby saving the labor cost and achieving the low error rate.

### BRIEF DESCRIPTION OF THE DRAWINGS

To illustrate the technical solutions in the embodiments of the present invention or in the prior art more clearly, accompanying drawings required for describing the embodiments or the prior art are briefly introduced below. Apparently, the accompanying drawings in the following description are merely some embodiments of the present invention, and persons of ordinary skill in the art may further obtain other drawings according to the accompanying drawings without creative efforts.
FIG. 1 is a flow chart of a method for notifying wavelength service information according to Embodiment 1;
FIG. 2 is a flow chart of a method for notifying wavelength services information according to Embodiment 2;
FIG. 3 is a schematic diagram of a Wave Channel Status Subobject according to Embodiment 2;
FIG. 4 is a schematic structural block diagram of a site according to Embodiment 3;
FIG. 5 is a schematic structural block diagram of another site according to Embodiment 3;
FIG. 6 is a schematic structural block diagram of another site according to Embodiment 3; and
FIG. 7 is a schematic diagram of a system for notifying wavelength service information according to Embodiment 4.

### DETAILED DESCRIPTION OF THE EMBODIMENTS

The technical solutions in the embodiments of the present invention are described clearly and completely in the following with reference to the accompanying drawings in the embodiments of the present invention. Evidently, the embodiments to be described are merely part of rather than all of the embodiments of the present invention. All other embodiments obtained by persons of ordinary skill in the art based on the embodiments of the present invention without creative efforts shall fall within the protection scope of the present invention.

### Embodiment 1

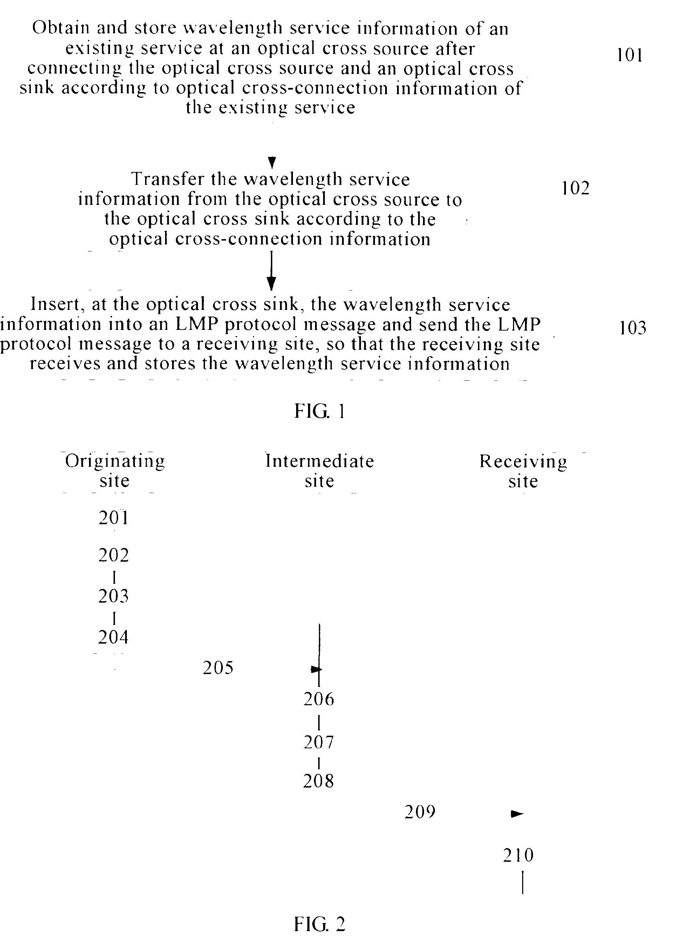

An embodiment of the present invention provides a method for notifying wavelength service information. As shown in FIG. 1, the method includes the hollowing steps.

101: Obtain and store wavelength service information of an existing service at an optical cross source after connecting the optical cross source and an optical cross sink according to optical cross-connection information of the existing service.

The wavelength service information includes a light wavelength, a signal rate and a modulation code pattern; the optical cross-connection information includes an optical cross source identifier and an optical cross sink identifier, and is configured manually or by a system.

When the existing service is transmitted, a wavelength path for transmission has been allocated to the existing service. An optical cross is created for a site according to the wavelength path and optical cross-connection information is configured by an optical network system or manually. The optical cross-connection information includes an optical cross source identifier and an optical cross sink identifier.

The site stores the wavelength service information after obtaining the wavelength service information of the existing service at the optical cross source.

102: Transfer the wavelength service information from the optical cross source to the optical cross sink according to the optical cross-connection information.

The optical cross-connection information has been configured for the existing service manually or by the system, and the site transfers the wavelength service information of the existing service from the optical cross source to the optical cross sink according to the optical cross-connection information of the existing service.

103: Insert, at the optical cross sink, the wavelength service information into an LMP (Link Management Protocol, link management protocol) protocol message and send the LMP protocol message to a receiving site, so that the receiving site receives and stores the wavelength service information.

After storing the wavelength service information, the receiving site may flood the wavelength service information by using a routing protocol, so that all other sites in the system know the wavelength service information, in order to select a wavelength path for a new service according to the light wavelength, the signal rate and the modulation code pattern that are in the wavelength service information.

When receiving the wavelength service information, the optical cross sink triggers inserting of the wavelength service information into the LMP protocol message and sending, at an interface of the optical cross sink, of the LMP protocol message to the receiving site by an LMP module. The optical cross sink is connected to a receiving interface of the receiving site of the existing service through an optical fiber.

After receiving the LMP protocol message which is sent by the site and the wavelength service information is inserted into, the receiving site parses the LMP protocol message to obtain the wavelength service information, and stores the wavelength service information.

Till now, wavelength service information of a wavelength service has been notified to sites, namely the site and the receiving site, on the wavelength path for transmitting the existing service. Therefore, the optical network system may flood, by using the routing protocol, the wavelength service information of the existing service being transmitted by the site and the receiving site, so that each site in the optical network system may know this information. In this way, in a network where a wavelength path provisioned by a control plane and a statically provisioned wavelength path coexist, the control plane selects a wavelength path for a new service according to the light wavelength, the signal rate and the modulation code pattern that are in the wavelength service information of the existing service when provisioning the wavelength service, so that wavelength services whose signal rates and modulation code patterns affect each other have a certain wavelength interval when being transmitted on a same optical fiber, or it is automatically selected that wavelength services whose signal rates and modulation code patterns affect each other are not transmitted on a same optical fiber.

In the foregoing method, the site may be an originating site OTM (optical terminal multiplexer, optical terminal multiplexer), and may also be an intermediate site ROADM (reconfiguration optical add/drop multiplexer, reconfigurable optical add/drop multiplexer). Definitely, the site may also be an intermediate site FOADM (fixed optical add/drop multiplexer, fixed optical add/drop multiplexer). Optical cross-connection of such a site does not need to be explicitly configured, and is implemented through an optical fiber, and a relationship between a source and a sink is fixed. The wavelength service information is stored in an OMS (optical multiplexing section, optical multiplexing section) of each site. The wavelength service information is stored in an OMS (optical multiplexing section, optical multiplexing section) of each site.

The embodiment of the present invention provides the method for notifying wavelength service information. The site obtains and stores the wavelength service information of the existing service at the optical cross source after connecting the optical cross source and the optical cross sink according to the optical cross-connection information of the existing service, and then transfers the wavelength service information from the optical cross source to the optical cross sink according to the optical cross-connection information, and inserts, at the optical cross sink, the wavelength service information into the LMP protocol message and sends the LMP protocol message to the receiving site, so that the receiving site stores the wavelength service information, in order to select the wavelength path for the new service according to the light wavelength, the signal rate and the modulation code pattern that are in the wavelength service information. In this way, each site on the wavelength path may automatically obtain wavelength service information of a transmitted wavelength service, thereby saving a labor cost and achieving a low error rate.

### Embodiment 2

An embodiment of the present invention provides a method for notifying wavelength service information. As shown in FIG. 2, the method includes the following steps.

201: An originating site connects an optical cross source and an optical cross sink according to optical cross-connection information of an existing service.

The optical cross-connection information includes an optical cross source identifier and an optical cross sink identifier, and is configured manually or by a system.

The originating site is a first site where transmission of the existing service starts; when the existing service is transmitted, a wavelength path for transmission has been allocated to the existing service. An optical cross is created for the originating site according to the wavelength path and optical cross-connection information is configured by an optical network system or manually. The optical cross-connection information includes optical cross source information and optical cross sink information.

202: The originating site obtains and stores wavelength service information of the existing service at the optical cross source.

The wavelength service information includes a light wavelength, a signal rate and a modulation code pattern.

When transmitting the existing service, the originating site on the wavelength path of the existing service modulates, on an OTU (Optical Transponder Unit, optical transponder unit) of the site, an electrical signal of the existing service to an optical signal at a certain signal rate and according to a certain modulation code pattern, where the optical signal is borne on a light wavelength for transmission. In this case, the optical cross source is the OTU of the site, and the originating site may obtain the wavelength service information, that is, the light wavelength, the signal rate and the modulation code pattern, of the existing service from the optical cross source OTU, and store the wavelength service information.

203: The originating site transfers the wavelength service information from the optical cross source to the optical cross sink according to the optical cross-connection information.

The optical cross-connection information has been configured for the existing service manually or by the system, and the site transfers the wavelength service information of the existing service from the optical cross source to the optical cross sink according to the optical cross-connection information of the existing service.

204: The originating site inserts, at the optical cross sink, the wavelength service information into an LMP protocol message to obtain a first LMP protocol message.

After receiving the wavelength service information, the optical cross sink triggers inserting of the wavelength service information into the LMP protocol message to obtain the first LMP protocol message through extension by an LMP module.

Specifically, there are two solutions for inserting the wavelength service information into the LMP protocol message to obtain the first LMP protocol message.

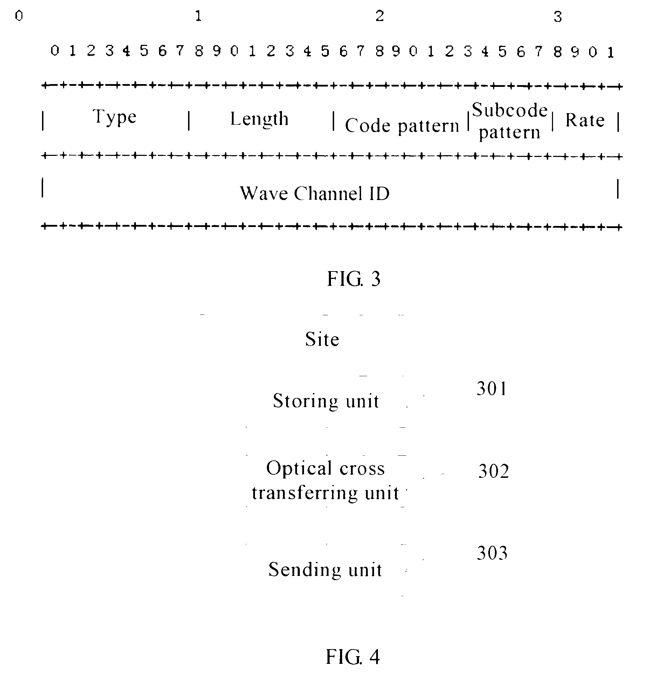

One solution is to insert the wavelength service information into an original LMP data status related message in the LMP protocol message to obtain the first LMP protocol message. The LMP data status related message includes: Confirm Data Channel Status Messages (confirm data channel status messages), Confirm Data Channel Status Ack Messages (confirm data channel status ack messages) and Confirm Data Channel Status Nack Messages (confirm data channel status nack messages). Specifically, the wavelength service information is inserted into, that is, a subobject Wave Channel Status Subobject (wave channel status subobject) is newly added to, <DATA_LINK> objects in two messages of the Confirm Data Channel Status Messages (confirm data channel status messages) and the Confirm Data Channel Status Ack Messages (confirm data channel status ack messages) in RFC5818 of an LMP protocol. Actually, the Confirm Data Channel Status Messages are messages into which the wavelength service information needs to be inserted in the LMP protocol in the originating site. When a next site receives the Confirm Data Channel Status Messages, if a link is normal, the Confirm Data Channel Status Ack Messages into which the wavelength service information is inserted are fed back to the originating site, to confirm that the next site receives the wavelength service information; if the link is abnormal, the Confirm Data Channel Status Nack Messages are fed back to the originating site, to confirm that the next site does not receive the wavelength service information. The three messages in the LMP data status related message are a conversation process of the LMP protocol; a specific communication process is clear to persons skilled in the art, and is not described in detail here. As shown in FIG. 3, a code pattern, a subcode pattern, a rate and a wave channel ID (Wave Channel ID) are defined in the Wave Channel Status Subobject. The code pattern is of 8 Bits, and a value includes: unknow, NRZ. ODB, DQPSK, cPDM-QPSK and so on. The subcode pattern is of 4 Bits for extending a definition of the code pattern. The modulation code pattern of the wavelength service is determined by values of the code pattern and the subcode pattern together. The rate is of 4 Bits, and a value includes: unused, 10G, 40G and 100G; the rate is the signal rate. The wave channel ID is of 4 bytes, and the wave channelled may be mapped to a light wavelength of a signal.

The other solution is to load the wavelength service information into a newly added LMP wavelength status related message, and insert the newly added LMP wavelength status related message into the LMP protocol message, to obtain the first LMP protocol message. The newly added LMP wavelength status related message includes: a wave channel status message, a wave channel status ack message and a wave channel status nack message. The new LMP protocol message is sent periodically or sent in an event-driven manner.

The newly added LMP wavelength status message includes:

```
       Wave Channel Status Messages (wave channel status messages)
       <WaveChannelStatus Message> ::= <Common Header>
                                           <LOCAL_LINK_ID>
                                           <MESSAGE_ID>
       <DATA_LINK>[<DATA_LINK>...]:
       Wave Channel Status Ack Messages (wave channel status ack messages)
       <WaveChannclStatusAck Message> ::= <Common Header>
       <MESSAGE_ID_ACK>
       <DATA_LINK>[<DATA_LINK>...];
       Wave Channel Status Nack Messages (Wave Channel Status Nack messages)
       <WaveChannelStatusNack Message> ::_ <Common Header>
       [<LOCAL_LINK_ID>]
       <MESSAGE_ID_ACK>
       <ERROR_CODE>
```

The wavelength service information is inserted into, that is, a subobject Wave Channel Status Subobject (wave channel status subobject) is newly added to, <DATA_LINK> objects of the foregoing messages of the Wave Channel Status Messages and the Wave Channel Status Ack Messages. Specifically, the Wave Channel Status Messages are messages into which the wavelength service information needs to be inserted in an LMP protocol in the originating site. When a next site receives the Wave Channel Status Messages, if a link is normal, the Wave Channel Status Ack Messages into which the wavelength service information is inserted are fed back to the originating site, to confirm that the next site receives the wavelength service information; if the link is abnormal, the Wave Channel Status Nack Messages are fed back to the originating site, to confirm that the next site does not receive the wavelength service information. The three messages in the LMP data status related message are a conversation process of the LMP protocol; a specific communication process is the same as that of other messages in the LMP protocol, and is not described in detail here. As shown in FIG. 3, a code pattern, a subcode pattern, a rate and a wave channel ID (Wave Channel ID) are defined in the Wave Channel Status Subobject. The code pattern is of 8 Bits, and a value includes: unknown. NRZ. ODB, DQPSK. cPDM-QPSK and so on. The subcode pattern is of 4 Bits for extending a definition of the code pattern. The modulation code pattern of the wavelength service is determined by values of the code pattern and the subcode pattern together. The rate is of 4 Bits, and a value includes: unused, 10G, 40G and 100G; the rate is the signal rate. The wave channel ID is of 4 bytes, and the wave channel ID may be mapped to a light wavelength of a signal. It may be defined that the new LMP protocol message that is newly added is sent periodically or sent in an event-driven manner, that is, the LMP protocol message is sent when the newly added subobject Wave Channel Status Subobject (wave channel status subobject) is included in the LMP protocol message.

205: The originating site sends the first LMP protocol message to an intermediate site, and the intermediate site receives the first LMP protocol message at the optical cross source.

After obtaining the first LMP protocol message, the optical cross sink of the originating site sends the first LMP protocol message that includes the wavelength service information to an intermediate site corresponding to an interface of the optical cross sink. A boundary optical interface of a network element of the optical cross source of the intermediate site receives the first LMP protocol message sent by the originating site, where the first LMP protocol message carries the wavelength service information.

The optical cross sink of the originating site is connected to the optical cross source of the intermediate site of the existing service through an optical fiber, so that the wavelength service information of the existing service is carried by the LMP protocol message of each site, and transmitted and stored according to the optical cross-connection information site by site.

206: The intermediate site obtains the wavelength service information from the first LMP protocol message and stores the wavelength service information at the optical cross source.

After the intermediate site obtains the first LMP protocol message at the optical cross source of the intermediate site, the LMP module parses the first LMP protocol message to obtain the wavelength service information, and the intermediate site stores the wavelength service information after obtaining the wavelength service information.

The intermediate site in steps 205 to 206 is a next site of the originating site, and receives the first LMP protocol message sent by the originating site. The existing service is transmitted, through several sites, and there are several intermediate sites. The intermediate site may receive a third LMP protocol message at its own optical cross source, and obtain wavelength service information from the third LMP protocol message and store the wavelength service information at the optical cross source, where the third LMP protocol message is sent by a previous intermediate site.

Optionally, when the existing service reaches an intermediate site, the intermediate site may also modulate the existing service again to modulate the existing service to a different signal rate and modulation code pattern, which are loaded on a different wavelength for transmission. In this case, the optical cross source of the intermediate site is the OTU, and the intermediate site may obtain the wavelength service information of the existing service from the optical cross source OTU directly.

207: The intermediate site transfers the wavelength service information from the optical cross source to the optical cross sink according to the optical cross-connection information.

The optical cross-connection information has been configured for the existing service manually or by the system, and the intermediate site transfers the wavelength service information of the existing service from the optical cross source to the optical cross sink according to the optical cross-connection information of the existing service.

208: The intermediate site inserts the wavelength service information into an LMP protocol message to obtain a second LMP protocol message.

After the optical cross sink of the intermediate site receives the wavelength service information, the LMP module of the intermediate site inserts the wavelength service information into the LMP protocol message to obtain the second LMP protocol message through extension. There are two solutions for inserting the wavelength service information into the LMP protocol message to obtain the second LMP protocol message. One solution is to insert the wavelength service information into an original LMP data status related message in the LMP protocol message to obtain the new LMP protocol message. The LMP data status related message includes: a confirm data channel status message, a confirm data channel status ack message and a confirm data channel status nack message. The other solution is to load the wavelength service information into a newly added LMP wavelength status related message, and insert the newly added LMP wavelength status related message into the LMP protocol message, so as to obtain the new LMP protocol message. The newly added LMP wavelength status related message includes: a wave channel status message and a wave channel status ack message. It may be defined that the new LMP protocol message is sent periodically or sent in an event-driven manner, that is, the LMP protocol message is sent when a newly added subobject Wave Channel Status Subobject (wave channel status subobject) is included in the LMP protocol message. The two solutions are both described in detail in 204 of a method procedure shown in FIG. 2, and are not repeatedly described here.

209: The intermediate site sends the new LMP protocol message to a receiving site.

Optionally, the intermediate site may also send the second LMP protocol message to a next intermediate site, so that the next intermediate site obtains and stores the wavelength service information that is in the new LMP protocol message, and sends the wavelength, service information to the receiving site through a second LMP protocol message generated by the next intermediate site.

After obtaining the second LMP protocol message, the optical cross sink sends the second LMP protocol message to a site corresponding to the interface of the optical cross sink. The corresponding site may be the intermediate site, and may also be the receiving site. After receiving the new LMP protocol message, the intermediate site obtains the wavelength service information through parsing, and sends the wavelength service information to a next intermediate site through a second LMP protocol message generated by the intermediate site until the receiving site is reached.

210: After receiving the second LMP protocol message, the receiving site parses the second LMP protocol message to obtain the wavelength service information, and stores the wavelength service information.

Till now, wavelength service information of a wavelength service has been notified to sites, namely the originating site, the intermediate site and the receiving site, on the wavelength path for transmitting the wavelength service. Therefore, the optical network system may flood, by using a routing protocol, the wavelength service information of the existing service transmitted by each site on the wavelength path, so that each site in the optical network system may know this information. In this way, in a network where a wavelength path provisioned by a control plane and a statically provisioned wavelength path coexist, the control plane selects a wavelength path for a new service according to the light wavelength, the signal rate and the modulation code pattern that are in the wavelength service information of the existing service when provisioning the wavelength service, so that wavelength services whose signal rates and modulation code patterns affect each other have a certain wavelength interval when being transmitted on a same optical fiber, or it is automatically selected that wavelength services whose signal rates and modulation code patterns affect each other are not transmitted on a same optical fiber.

In the foregoing method, the originating site and the receiving site are generally OTMs, the intermediate site is generally an ROADM, and definitely, the intermediate site may also be an FOADM. Optical cross-connection of such an intermediate site does not need to be explicitly configured, and is implemented through an optical fiber, and a relationship between a source and a sink is fixed. The wavelength service information is stored in an OMS of each site.

The embodiment of the present invention provides the method for notifying wavelength service information. The site connects the optical cross source and the optical cross sink according to the optical cross-connection information of the existing service, and obtains and stores the wavelength service information of the existing service at the optical cross source, then transfers the wavelength service information from the optical cross source to the optical cross sink according to the optical cross-connection information, and inserts, at the optical cross sink, the wavelength service information into the LMP protocol message to obtain the first LMP protocol message and then sends the first LMP protocol message to the next site, so that the next site obtains and stores the wavelength service information that is in the first LMP protocol message, and sends the wavelength service information to the receiving site through the second LMP protocol message generated by the next site, so that the receiving site stores the wavelength service information, in order to select the wavelength path for the new service according to the light wavelength, the signal rate and the modulation code pattern that are in the wavelength service information. In this way, each site on the wavelength path may automatically obtain wavelength service information of a transmitted wavelength service, thereby saving a labor cost and achieving a low error rate.

### Embodiment 3

An embodiment of the present invention provides a site. As shown in FIG. 4, the site includes: an optical storing unit 301, an optical cross transferring unit 302 and a sending unit 303.

The storing unit 301 is configured to obtain and store wavelength service information of an existing service at an optical cross source after connecting the optical cross source and an optical cross sink according to optical cross-connection information of the existing service.

The wavelength service information includes a light wavelength, a signal rate and a modulation code pattern. The optical cross-connection information includes an optical cross source identifier and an optical cross sink identifier, and is configured manually or by a system.

When the existing service is transmitted, a wavelength path for transmission has been allocated to the existing service. An optical cross is created for the site according to the wavelength path, and optical cross-connection information is configured by an optical network system or manually. The optical cross-connection information includes optical cross source information and optical cross sink information, where the optical cross sink is connected to a receiving interface of a site that intends to receive a wavelength service, that is, all information sent from the optical cross sink is received by a receiving interface of a corresponding site.

The site stores the wavelength service information after obtaining the wavelength service information of the existing service at the optical cross source.

The optical cross transferring unit 302 is configured to transfer the wavelength service information from the optical cross source to the optical cross sink according to the optical cross-connection information.

The optical cross-connection information has been configured for the existing service manually or by the system, and the site transfers the wavelength service information of the existing service from the optical cross source to the optical cross sink according to the optical cross-connection information of the existing service.

The sending unit 303 is configured to insert, at the optical cross sink, the wavelength service information into an LMP protocol message and send the LMP protocol message to a receiving site, so that the receiving site receives and stores the wavelength service information, in order to select a wavelength path for a new service according to the light wavelength, the signal rate and the modulation code pattern that are in the wavelength service information.

When receiving the wavelength service information, the optical cross sink triggers inserting of the wavelength service information into the LMP protocol message and sending, at an interface of the optical cross sink, of the LMP protocol message to the receiving site by an LMP module.

After receiving the LMP protocol message which is sent by the site and the wavelength service information is inserted into, the receiving site parses the LMP protocol message to obtain the wavelength service information, and stores the wavelength service information.

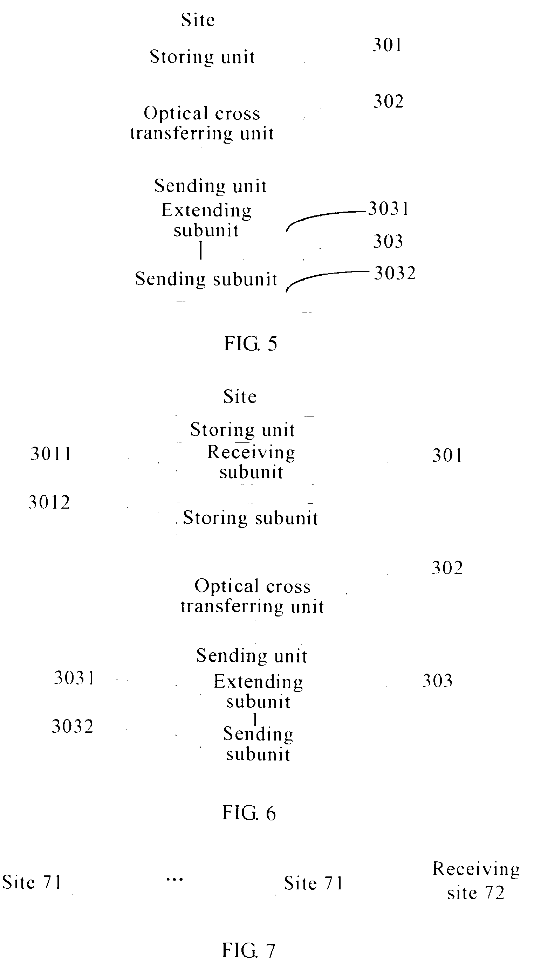

Further, as shown in FIG. 5, the sending unit 303 further includes:
An extending subunit 3031 is configured to insert, at the optical cross sink, the wavelength service information into an LMP protocol message to obtain a first LMP protocol message.

After the optical cross sink of the site receives the wavelength service information, the LMP module of the site inserts the wavelength service information into the LMP protocol message to obtain the first LMP protocol message through extension. There are two solutions for inserting the wavelength service information into the LMP protocol message to obtain the first LMP protocol message. One solution is to insert the wavelength service information into an original LMP data status related message in the LMP protocol message to obtain the first LMP protocol message. The LMP data status related message includes: a confirm data channel status message, a confirm data channel status ack message and a confirm data channel status nack message. The other solution is to load the wavelength service information into a newly added LMP wavelength status related message, and insert the newly added LMP wavelength status related message into the LMP protocol message, so as to obtain the first LMP protocol message. The newly added LMP wavelength status related message includes: a wave channel status message and a wave channel status ack message. It may be defined that the new LMP protocol message is sent periodically or sent in an event-driven manner, that is, the LMP protocol message is sent when a newly added subobject Wave Channel Status Subobject (waive channel status subobject) is included in the LMP protocol message. The two solutions are both described in detail in 204 of a method procedure shown in FIG. 2, and are not repeatedly described here.

A sending subunit 3032 is configured to send, at the optical cross sink, the first LMP protocol message to a next site, so that the next site obtains and stores the wavelength service information that is in the first LMP protocol message, and sends the wavelength service information to the receiving site through a second LMP protocol message generated by the next site.

The site in FIG. 4 or 5 is an originating site, that is, a first site where transmission of the existing service starts.

Further, as shown in FIG. 6, the storing unit 301 further includes:
a receiving subunit 3011, configured to receive a third LMP protocol message at the optical cross source, where the third LMP protocol message is sent by a previous site; and
a storing subunit 3012, configured to obtain the wavelength service information from the third LMP protocol message and store the wavelength service information at the optical cross source.

After the site receives the third LMP protocol message, the LMP module in the site obtains the wavelength service information in the third LMP protocol message through parsing and stores the wavelength service information, and the site obtains, at the optical cross source, the wavelength service information, and stores the wavelength service information.

The sites in FIGs 4, 5 and 6 may also be an intermediate site, that is, any site between the first site where the transmission of the existing service starts and a last site (the receiving site).

The embodiment of the present invention provides the site, which connects the optical cross source and the optical cross sink according to the optical cross-connection information of the existing service, and obtains and stores the wavelength service information of the existing service at the optical cross source, then transfers the wavelength service information from the optical cross source to the optical cross sink according to the optical cross-connection information, and inserts, at the optical cross sink, the wavelength service information into the LMP protocol message to obtain the first LMP protocol message and then sends the first LMP protocol message to the next site, so that the next site obtains and stores the wavelength service information that is in the first LMP protocol message, and sends the wavelength service information to the receiving site through the second LMP protocol message generated by the next site, so that the receiving site stores the wavelength service information, in order to select the wavelength path for the new service according to the light wavelength, the signal rate and the modulation code pattern that are in the wavelength service information. In this way, each site on the wavelength path may automatically obtain wavelength service information of a transmitted wavelength service, thereby saving a labor cost and achieving a low error rate.

### Embodiment 4

An embodiment of the present invention provides a system for notifying wavelength service information. As shown in FIG. 7, the system includes a site 71 and a receiving site 72.

The site 71 is the site described in Embodiment 3.

The site 71 is configured to obtain and store wavelength service information of an existing service at an optical cross source after connecting the optical cross source and an optical cross sink according to optical cross-connection information of the existing service, then transfer the wavelength service information from the optical cross source to the optical cross sink according to the optical cross-connection information, and insert, at the optical cross sink, the wavelength service information into a link management protocol message and send the link management protocol message to the receiving site 72.

The site 71 is further configured to receive a third link management protocol message sent by a previous site, and obtain the wavelength service information from the third link management protocol message and store the wavelength service information at the optical cross source; then transfer the wavelength service information from the optical cross source to the optical cross sink according to the optical cross-connection information; and insert, at the optical cross sink, the wavelength service information into the link management protocol message to obtain a first link management protocol message, and then send, at the optical cross sink, the first link management protocol message to a next site, so that the next site obtains and stores the wavelength service information that is in the first link management protocol message, and sends the wavelength service information to the receiving site through a second link management protocol message generated by the next site.

The receiving site 72 is configured to receive and store the wavelength service information.

The site 71 sends the LMP protocol message that includes the wavelength service information to the receiving site 72 through an interface of the optical cross sink of the site 71. The interface of the optical cross sink of the site 71 is correspondingly connected to a receiving interface of the receiving site 72 through an optical fiber.

The site 71 may be an originating site on an entire wavelength path of the existing service, and may also be an intermediate site on the wavelength path. Sites on the wavelength path in the system may be just one site and one receiving site, where the site is the originating site; and may also be multiple sites and one receiving site, where the multiple sites are one originating site and multiple intermediate sites.

The site 71 sends the first LMP protocol message that includes the wavelength service information to the next site through the interface of the optical cross sink of the site 71, where the interface of the optical cross sink of the site is correspondingly connected to a receiving interface of the next site. After receiving the first LMP protocol message, the next site parses the first LMP protocol message and stores the wavelength service information that is in the first LMP protocol message, then inserts the wavelength service information into its own LMP protocol message to obtain a third LMP protocol message, and sends the third LMP protocol message to a next intermediate site until the wavelength service information is transferred to a last intermediate site, so that this intermediate site transfers the wavelength service information to the receiving site 72 through a second LMP protocol message generated by the intermediate site, where an interface of an optical cross sink in each site is connected to a receiving interface of a corresponding next site, thereby ensuring normal communication. The wavelength service information is stored in each of the sites one by one. Therefore, each site on the wavelength path obtains wavelength service information of a transmitted wavelength service. Further, an optical network system may flood, by using a routing protocol, the wavelength service information of the service being transmitted by each site on the wavelength path, so that each site in the optical network system may know this information. In this way, in a network where a wavelength path provisioned by a control plane and a statically provisioned wavelength path coexist, the control plane selects a wavelength path for a new service according to the light wavelength, the signal rate and the modulation code pattern that are in the wavelength service information of the existing service when provisioning the wavelength service, so that wavelength services that affect each other because signal rates and modulation code patterns are different have a certain wavelength interval when being transmitted on a same optical fiber, or it is automatically selected that wavelength services whose signal rates and modulation code patterns affect each other are not transmitted on a same optical fiber.

The embodiment of the present invention provides the system for notifying wavelength service information. The site connects the optical cross source and the optical cross sink according to the optical cross-connection information of the existing service, and obtains and stores the wavelength service information of the existing service at the optical cross source, then transfers the wavelength service information from the optical cross source to the optical cross sink according to the optical cross-connection information, and inserts, at the optical cross sink, the wavelength service information into the LMP protocol message to obtain the first LMP protocol message and then sends the first LMP protocol message to the next site, so that the next site obtains and stores the wavelength service information that is in the first LMP protocol message, and sends the wavelength service information to the receiving site through the second LMP protocol message generated by the next site, so that the receiving site stores the wavelength service information, in order to select the wavelength path for the new service according to the light wavelength, the signal rate and the modulation code pattern that are in the wavelength service information. In this way, each site on the wavelength path may automatically obtain the wavelength service information of the transmitted wavelength service, thereby saving a labor cost and achieving a low error rate.

Persons of ordinary skill in the art should understand that all or part of the steps of the foregoing method embodiments may be implemented by a program instructing relevant hardware. The program may be stored in a computer readable storage medium. When the program runs, the program executes the steps of the foregoing method embodiments. The storage medium may be any medium capable of storing program codes such as a ROM, a RAM, a magnetic disk, or an optical disk.

The foregoing description is merely specific implementation manners of the present invention, but not intended to limit the protection scope of the present invention. Any variation or replacement that may be easily derived by persons skilled in the art within the technical scope disclosed in the present invention shall fall within the protection scope of the present invention. Therefore, the protection scope of the present invention shall be subject to the appended claims.

## Claims

1. A method for notifying wavelength service information, comprising:
obtaining and storing wavelength service information of an existing service at an optical cross source after connecting the optical cross source and an optical cross sink according to optical cross-connection information of the existing service, wherein the wavelength service information comprises a light wavelength, a signal rate and a modulation code pattern (101);
transferring the wavelength service information from the optical cross source to the optical cross sink according to the optical cross-connection information (102); and
inserting, at the optical cross sink, the wavelength service information into a link management protocol message and sending the link management protocol message to a receiving site, so that the receiving site receives and stores the wavelength service information, in order to select a wavelength path for a new service according to the light wavelength, the signal rate and the modulation code pattern that are in the wavelength service information (103).

2. The method according to claim 1, wherein the inserting, at the optical cross sink, the wavelength service information into the link management protocol message and sending the link management protocol message to the receiving site further comprises:
inserting, at the optical cross sink, the wavelength service information into the link management protocol message to obtain a first link management protocol message; and
sending, at the optical cross sink, the first link management protocol message to a next site, so that the next site obtains and stores the wavelength service information that is in the first link management protocol message, and sends the wavelength service information to the receiving site through a second link management protocol message generated by the next site.

3. The method according to claim 1 or 2, wherein the obtaining and storing the wavelength service information of the existing service at the optical cross source further comprises:
obtaining and storing the wavelength service information of the existing service at the optical cross source directly;
or
receiving a third link management protocol message at the optical cross source, and obtaining the wavelength service information from the third link management protocol message and storing the wavelength service information at the optical cross source, wherein the third link management protocol message is sent by a previous site.

4. The method according to claim 2, wherein the inserting, at the optical cross sink, the wavelength service information into the link management protocol message to obtain the first link management protocol message comprises:
inserting the wavelength service information into a link management data status related message in the link management protocol message to obtain the first link management protocol message, wherein the link management data status related message comprises: a confirm data channel status message.

5. The method according to claim 2, wherein the inserting, at the optical cross sink, the wavelength service information into the link management protocol message to obtain the first link management protocol message comprises:
loading the wavelength service information into a newly added link management wavelength status related message, and inserting the newly added link management wavelength status related message into the link management protocol message, so as to obtain the first link management protocol message, wherein the newly added link management wavelength status related message comprises: a wave channel status message.

6. The method according to claim 5, wherein the first link management protocol message is sent periodically or sent in an event-driven manner.

7. A site, comprising:
a storing unit (301), configured to obtain and store wavelength service information of an existing service at an optical cross source after connecting the optical cross source and an optical cross sink according to optical cross-connection information of the existing service, wherein the wavelength service information comprises a light wavelength, a signal rate and a modulation code pattern;
an optical cross transferring unit (302), configured to transfer the wavelength service information from the optical cross source to the optical cross sink according to the optical cross-connection information; and
a sending unit (303), configured to insert, at the optical cross sink, the wavelength service information into a link management protocol message and send the link management protocol message to a receiving site, so that the receiving site receives and stores the wavelength service information, in order to select a wavelength path for a new service according to the light wavelength, the signal rate and the modulation code pattern that are in the wavelength service information.

8. The site according to claim 7, wherein the sending unit further comprises:
an extending subunit, configured to insert, at the optical cross sink, the wavelength service information into the link management protocol message to obtain a first link management protocol message; and
a sending subunit, configured to send, at the optical cross sink, the first link management protocol message to a next site, so that the next site obtains and stores the wavelength service information that is in the first link management protocol message, and sends the wavelength service information to the receiving site through a second link management protocol message generated by the next site.

9. The site according to claim 8, wherein the storing unit further comprises:
a receiving subunit, configured to receive a third link management protocol message at the optical cross source, wherein the third link management protocol message is sent by a previous site; and
a storing subunit, configured to obtain the wavelength service information from the third link management protocol message and store the wavelength service information at the optical cross source.

10. The site according to claim 8, wherein the extending subunit is further configured to:
insert the wavelength service information into a link management data status related message in the link management protocol message to obtain the first link management protocol message, wherein the link management data status related message comprises: a confirm data channel status message.

11. The site according to claim 8, wherein the extending subunit is further configured to:
load the wavelength service information into a newly added link management wavelength status related message, and insert the newly added link management wavelength status related message into the link management protocol message, so as to obtain the first link management protocol message, wherein the newly added link management wavelength status related message comprises: a wave channel status message.

12. The site according to claim 11, wherein the link management protocol message is sent periodically or sent in an event-driven manner.

13. A system for notifying wavelength service information, comprising: a site (71) according to any one of claim 7-12 and a receiving site (72), wherein the receiving site is configured to receive and store the wavelength service information.

14. The system according to claim 13, wherein
the site is further configured to receive a third link management protocol message sent by a previous site, and obtain the wavelength service information from the third link management protocol message and store the wavelength service information at the optical cross source; then transfer the wavelength service information from the optical cross source to the optical cross sink according to the optical cross-connection information; and insert, at the optical cross sink, the wavelength service information into the link management protocol message to obtain a first link management protocol message, and then send, at the optical cross sink, the first link management protocol message to a next site, so that the next site obtains and stores the wavelength service information that is in the first link management protocol message, and sends the wavelength service information to the receiving site through a second link management protocol message generated by the next site.

## Patentansprüche

1. Verfahren zum Melden von Wellenlängen-Dienstinformationen, das Folgendes umfasst:
Erhalten und Speichern von Wellenlängen-Dienstinformationen eines vorhandenen Dienstes an einer optischen Kreuzquelle nach dem Verbinden der optischen Kreuzquelle und einer optischen Kreuzsenke gemäß den optischen Kreuzverbindungsinformationen des vorhandenen Dienstes, wobei die Wellenlängen-Dienstinformationen eine Lichtwellenlänge, eine Signalrate und ein Modulationscodemuster umfassen, (101);
Übertragen der Wellenlängen-Dienstinformationen von der optischen Kreuzquelle zu der optischen Kreuzsenke gemäß den optischen Kreuzverbindungsinformationen, (102); und
Einfügen, an der optischen Kreuzsenke, der Wellenlängen-Dienstinformationen in eine Verbindungsmanagementprotokollnachricht und Senden der Verbindungsmanagementprotokollnachricht an einen Empfangsstandort, so dass der Empfangsstandort die Wellenlängen-Dienstinformationen empfängt und speichert, um einen Wellenlängenweg für einen neuen Dienst gemäß der Lichtwellenlänge, der Signalrate und dem Modulationscodemuster, die sich in den Wellenlängen-Dienstinformationen befinden, auszuwählen, (103).

2. Verfahren nach Anspruch 1, wobei das Einfügen an der optischen Kreuzsenke der Wellenlängen-Dienstinformationen in die Verbindungsmanagementprotokollnachricht und das Senden der Verbindungsmanagementprotokollnachricht an den Empfangsstandort ferner Folgendes umfasst:
Einfügen an der optischen Kreuzsenke der Wellenlängen-Dienstinformationen in die Verbindungsmanagementprotokollnachricht, um eine erste Verbindungsmanagementprotokollnachricht zu erhalten; und
Senden an der optischen Kreuzsenke der ersten Verbindungsmanagementprotokollnachricht an einen nächsten Standort, so dass der nächste Standort die Wellenlängen-Dienstinformationen, die sich in der ersten Verbindungsmanagementprotokollnachricht befinden, erhält und speichert und die Wellenlängen-Dienstinformationen durch eine zweite Verbindungsmanagementprotokollnachricht, die durch den nächsten Standort erzeugt wird, an den Empfangsstandort sendet.

3. Verfahren nach Anspruch 1 oder 2, wobei das Erhalten und das Speichern der Wellenlängen-Dienstinformationen des vorhandenen Dienstes an der optischen Kreuzquelle ferner Folgendes umfasst:
direktes Erhalten und Speichern der Wellenlängen-Dienstinformationen des vorhandenen Dienstes an der optischen Kreuzquelle;
oder
Empfangen einer dritten Verbindungsmanagementprotokollnachricht an der optischen Kreuzquelle und Erhalten der Wellenlängen-Dienstinformationen aus der dritten Verbindungsmanagementprotokollnachricht und Speichern der Wellenlängen-Dienstinformationen in der optischen Kreuzquelle, wobei die dritte Verbindungsmanagementprotokollnachricht durch einen vorausgehenden Standort gesendet wird.

4. Verfahren nach Anspruch 2, wobei das Einfügen an der optischen Kreuzsenke der Wellenlängen-Dienstinformationen in die Verbindungsmanagementprotokollnachricht, um die erste Verbindungsmanagementprotokollnachricht zu erhalten, Folgendes umfasst: Einfügen der Wellenlängen-Dienstinformationen in eine auf den Verbindungsmanagementdatenstatus bezogene Nachricht in der Verbindungsmanagementprotokollnachricht, um die erste Verbindungsmanagementprotokollnachricht zu erhalten, wobei die auf den Verbindungsmanagementdatenstatus bezogene Nachricht Folgendes umfasst: eine Bestätigungsdatenkanalstatusnachricht.

5. Verfahren nach Anspruch 2, wobei das Einfügen an der optischen Kreuzsenke der Wellenlängen-Dienstinformationen in die Verbindungsmanagementprotokollnachricht, um die erste Verbindungsmanagementprotokollnachricht zu erhalten, Folgendes umfasst:
Laden der Wellenlängen-Dienstinformationen in eine neu hinzugefügte auf den Verbindungsmanagementwellenlängenstatus bezogene Nachricht und Einfügen der neu hinzugefügten auf den Verbindungsmanagementwellenlängenstatus bezogenen Nachricht in die Verbindungsmanagementprotokollnachricht, um die erste Verbindungsmanagementprotokollnachricht zu erhalten, wobei die neu hinzugefügte auf den Verbindungsmanagementwellenlängenstatus bezogene Nachricht Folgendes umfasst: eine Wellenkanalstatusnachricht.

6. Verfahren nach Anspruch 5, wobei die erste Verbindungsmanagementprotokollnachricht periodisch gesendet wird oder in einer ereignisgetriebenen Weise gesendet wird.

7. Standort, der Folgendes umfasst:
eine Speichereinheit (301), die konfiguriert ist, Wellenlängen-Dienstinformationen eines vorhandenen Dienstes an einer optischen Kreuzquelle nach dem Verbinden der optischen Kreuzquelle und einer optischen Kreuzsenke gemäß den optischen Kreuzverbindungsinformationen des vorhandenen Dienstes zu erhalten und zu speichern, wobei die Wellenlängen-Dienstinformationen eine Lichtwellenlänge, eine Signalrate und ein Modulationscodemuster umfassen;
eine optische Kreuzübertragungseinheit (302), die konfiguriert ist, die Wellenlängen-Dienstinformationen von der optischen Kreuzquelle zu der optischen Kreuzsenke gemäß den optischen Kreuzverbindungsinformationen zu übertragen; und
eine Sendeeinheit (303), die konfiguriert ist, an der optischen Kreuzsenke die Wellenlängen-Dienstinformationen in eine Verbindungsmanagementprotokollnachricht einzufügen und die Verbindungsmanagementprotokollnachricht an einen Empfangsstandort zu senden, so dass der Empfangsstandort die Wellenlängen-Dienstinformationen empfängt und speichert, um einen Wellenlängenweg für einen neuen Dienst gemäß der Lichtwellenlänge, der Signalrate und dem Modulationscodemuster, die sich in den Wellenlängen-Dienstinformationen befinden, auszuwählen.

8. Standort nach Anspruch 7, wobei die Sendeeinheit ferner Folgendes umfasst:
eine Erweiterungs-Untereinheit, die konfiguriert ist, an der optischen Kreuzsenke die Wellenlängen-Dienstinformationen in die Verbindungsmanagementprotokollnachricht einzufügen, um eine erste Verbindungsmanagementprotokollnachricht zu erhalten; und
eine Sende-Untereinheit, die konfiguriert ist, an der optischen Kreuzsenke die erste Verbindungsmanagementprotokollnachricht an einen nächsten Standort zu senden, so dass der nächste Standort die Wellenlängen-Dienstinformationen, die sich in der ersten Verbindungsmanagementprotokollnachricht befinden, erhält und speichert und die Wellenlängen-Dienstinformationen durch eine zweite Verbindungsmanagementprotokollnachricht, die durch den nächsten Standort erzeugt wird, an den Empfangsstandort sendet.

9. Standort nach Anspruch 8, wobei die Speichereinheit ferner Folgendes umfasst:
eine Empfangs-Untereinheit, die konfiguriert ist, eine dritte Verbindungsmanagementprotokollnachricht an der optischen Kreuzquelle zu empfangen, wobei die dritte Verbindungsmanagementprotokollnachricht durch einen vorausgehenden Standort gesendet wird; und
eine Speicher-Untereinheit, die konfiguriert ist, die Wellenlängen-Dienstinformationen aus der dritten Verbindungsmanagementprotokollnachricht zu erhalten und die Wellenlängen-Dienstinformationen an der optischen Kreuzquelle zu speichern.

10. Standort nach Anspruch 8, wobei die Erweiterungs-Untereinheit ferner konfiguriert ist:
die Wellenlängen-Dienstinformationen in eine auf den Verbindungsmanagementdatenstatus bezogene Nachricht in der Verbindungsmanagementprotokollnachricht einzufügen, um die erste Verbindungsmanagementprotokollnachricht zu erhalten, wobei die auf den Verbindungsmanagementdatenstatus bezogene Nachricht Folgendes umfasst: eine Bestätigungsdatenkanalstatusnachricht.

11. Standort nach Anspruch 8, wobei die Erweiterungs-Untereinheit ferner konfiguriert ist:
die Wellenlängen-Dienstinformationen in eine neu hinzugefügte auf den Verbindungsmanagementwellenlängenstatus bezogene Nachricht zu laden und die neu hinzugefügte auf den Verbindungsmanagementwellenlängenstatus bezogene Nachricht in die Verbindungsmanagementprotokollnachricht einzufügen, um die erste Verbindungsmanagementprotokollnachricht zu erhalten, wobei die neu hinzugefügte auf den Verbindungsmanagementwellenlängenstatus bezogene Nachricht Folgendes umfasst: eine Wellenkanalstatusnachricht.

12. Standort nach Anspruch 11, wobei die Verbindungsmanagementprotokollnachricht periodisch gesendet wird oder in einer ereignisgetriebenen Weise gesendet wird.

13. System zum Melden von Wellenlängen-Dienstinformationen, das Folgendes umfasst:
einen Standort (71) nach einem der Ansprüche 7-12 und einen Empfangsstandort (72), wobei der Empfangsstandort konfiguriert ist, die Wellenlängen-Dienstinformationen zu empfangen und zu speichern.

14. System nach Anspruch 13, wobei
der Standort ferner konfiguriert ist, eine von einem vorausgehenden Standort gesendete dritte Verbindungsmanagementprotokollnachricht zu empfangen und die Wellenlängen-Dienstinformationen aus der dritten Verbindungsmanagementprotokollnachricht zu erhalten und die Wellenlängen-Dienstinformationen in der optischen Kreuzquelle zu speichern; dann die Wellenlängen-Dienstinformationen von der optischen Kreuzquelle zu der optischen Kreuzsenke gemäß den optischen Kreuzverbindungsinformationen zu übertragen; und an der optischen Kreuzsenke die Wellenlängen-Dienstinformationen in die Verbindungsmanagementprotokollnachricht einzufügen, um eine erste Verbindungsmanagementprotokollnachricht zu erhalten; und dann an der optischen Kreuzsenke die erste Verbindungsmanagementprotokollnachricht an einen nächsten Standort zu senden, so dass der nächste Standort die Wellenlängen-Dienstinformationen, die sich in der ersten Verbindungsmanagementprotokollnachricht befinden, erhält und speichert und die Wellenlängen-Dienstinformationen durch eine zweite Verbindungsmanagementprotokollnachricht, die durch den nächsten Standort erzeugt wird, an den Empfangsstandort sendet.

## Revendications

1. Procédé de notification d'informations de service de longueur d'onde, comprenant :
l'obtention et la mémorisation d'informations de service de longueur d'onde d'un service existant au niveau d'une source de répartition optique après la connexion de la source de répartition optique et d'une arrivée de répartition optique en fonction d'informations de répartition optique du service existant, dans lequel les informations de service de longueur d'onde comprennent une longueur d'onde optique, un débit de signaux et une configuration de code de modulation (101) ;
le transfert des informations de service de longueur d'onde de la source de répartition optique à l'arrivée de répartition optique en fonction des informations de répartition optique (102) ; et
l'insertion, au niveau de l'arrivée de répartition optique, des informations de service de longueur d'onde dans un message de protocole de gestion de liaison et l'envoi du message de protocole de gestion de liaison à un site récepteur, de telle sorte que le site récepteur reçoive et mémorise les informations de service de longueur d'onde, afin de sélectionner un chemin de longueur d'onde pour un nouveau service en fonction de la longueur d'onde optique, du débit de signaux et de la configuration de code de modulation qui figurent dans les informations de service de longueur d'onde (103).

2. Procédé selon la revendication 1, dans lequel l'insertion, au niveau de l'arrivée de répartition optique, des informations de service de longueur d'onde dans le message de protocole de gestion de liaison et l'envoi du message de protocole de gestion de liaison au site récepteur comprennent en outre :
l'insertion, au niveau de l'arrivée de répartition optique, des informations de service de longueur d'onde dans le message de protocole de gestion de liaison pour obtenir un premier message de protocole de gestion de liaison ; et
l'envoi, au niveau de l'arrivée de répartition optique, du premier message de protocole de gestion de liaison à un site suivant, de telle sorte que le site suivant obtienne et mémorise les informations de service de longueur d'onde qui se trouvent dans le premier message de protocole de gestion de liaison, et envoie les informations de service de longueur d'onde au site récepteur par le biais d'un second message de protocole de gestion de liaison généré par le site suivant.

3. Procédé selon la revendication 1 ou 2, dans lequel l'obtention et la mémorisation des informations de service de longueur d'onde du service existant au niveau de la source de répartition optique comprennent en outre :
l'obtention et la mémorisation des informations de service de longueur d'onde du service existant au niveau de la source de répartition optique directement ;
ou
la réception d'un troisième message de protocole de gestion de liaison au niveau de la source de répartition optique, et l'obtention des informations de service de longueur d'onde depuis le troisième message de protocole de gestion de liaison et la mémorisation des informations de service de longueur d'onde au niveau de la source de répartition optique, dans lequel le troisième message de protocole de gestion de liaison est envoyé par un site précédent.

4. Procédé selon la revendication 2, dans lequel l'insertion, au niveau de l'arrivée de répartition optique, des informations de service de longueur d'onde dans le message de protocole de gestion de liaison pour obtenir le premier message de protocole de gestion de liaison comprend :
l'insertion des informations de service de longueur d'onde dans un message d'état de données de gestion de liaison dans le message de protocole de gestion de liaison pour obtenir le premier message de protocole de gestion de liaison, le message d'état de données de gestion de liaison comprenant : un message de confirmation d'état de canal de données.

5. Procédé selon la revendication 2, dans lequel l'insertion, au niveau de l'arrivée de répartition optique, des informations de service de longueur d'onde dans le message de protocole de gestion de liaison pour obtenir le premier message de protocole de gestion de liaison comprend :
le chargement des informations de service de longueur d'onde dans un message d'état de longueur d'onde de gestion de liaison nouvellement ajouté, et l'insertion du message d'état de longueur d'onde de gestion de liaison nouvellement ajouté dans le message de protocole de gestion de liaison, de façon à obtenir le premier message de protocole de gestion de liaison, dans lequel le message d'état de longueur d'onde de gestion de liaison nouvellement ajouté comprend : un message d'état de canal d'onde.

6. Procédé selon la revendication 5, dans lequel le premier message de protocole de gestion de liaison est envoyé périodiquement ou est envoyé dans un mode commandé par un événement.

7. Site, comprenant :
une unité de mémorisation (301), configurée pour obtenir et mémoriser des informations de service de longueur d'onde d'un service existant au niveau d'une source de répartition optique après la connexion de la source de répartition optique et d'une arrivée de répartition optique en fonction d'informations de répartition optique du service existant, dans lequel les informations de service de longueur d'onde comprennent une longueur d'onde optique, un débit de signaux et une configuration de code de modulation ;
une unité de transfert de répartition optique (302), configurée pour transférer les informations de service de longueur d'onde de la source de répartition optique à l'arrivée de répartition optique en fonction des informations de répartition optique ; et une unité d'envoi (303), configurée pour insérer, au niveau de l'arrivée de répartition optique, les informations de service de longueur d'onde dans un message de protocole de gestion de liaison et envoyer le message de protocole de gestion de liaison à un site récepteur, de telle sorte que le site récepteur reçoive et mémorise les informations de service de longueur d'onde, afin de sélectionner un chemin de longueur d'onde pour un nouveau service en fonction de la longueur d'onde optique, du débit de signaux et de la configuration de code de modulation qui figurent dans les informations de service de longueur d'onde.

8. Site selon la revendication 7, dans lequel l'unité d'envoi comprend en outre :
une sous-unité d'extension, configurée pour insérer, au niveau de l'arrivée de répartition optique, les informations de service de longueur d'onde dans le message de protocole de gestion de liaison pour obtenir un premier message de protocole de gestion de liaison ; et
une sous-unité d'envoi, configurée pour envoyer, au niveau de l'arrivée de répartition optique, le premier message de protocole de gestion de liaison à un site suivant, de telle sorte que le site suivant reçoive et mémorise les informations de service de longueur d'onde qui se trouvent dans le premier message de protocole de gestion de liaison, et envoie les informations de service de longueur d'onde au site récepteur par le biais d'un second message de protocole de gestion de liaison généré par le site suivant.

9. Site selon la revendication 8, dans lequel l'unité de mémorisation comprend en outre :
une sous-unité de réception, configurée pour recevoir un troisième message de protocole de gestion de liaison au niveau de la source de répartition optique, le troisième message de protocole de gestion de liaison étant envoyé par un site précédent ; et
une sous-unité de mémorisation, configurée pour obtenir les informations de service de longueur d'onde depuis le troisième message de protocole de gestion de liaison et mémoriser les informations de service de longueur d'onde au niveau de la source de répartition optique.

10. Site selon la revendication 8, dans lequel la sous-unité d'extension est configurée en outre pour :
insérer les informations de service de longueur d'onde dans un message d'état de données de gestion de liaison dans le message de protocole de gestion de liaison pour obtenir le premier message de protocole de gestion de liaison, le message d'état de données de gestion de liaison comprenant : un message de confirmation d'état de canal de données.

11. Site selon la revendication 8, dans lequel la sous-unité d'extension est configurée en outre pour :
charger les informations de service de longueur d'onde dans un message d'état de longueur d'onde de gestion de liaison nouvellement ajouté, et insérer le message d'état de longueur d'onde de gestion de liaison nouvellement ajouté dans le message de protocole de gestion de liaison, de façon à obtenir le premier message de protocole de gestion de liaison, dans lequel le message d'état de longueur d'onde de gestion de liaison nouvellement ajouté comprend : un message d'état de canal d'onde.

12. Site selon la revendication 11, dans lequel le message de protocole de gestion de liaison est envoyé périodiquement ou est envoyé dans un mode commandé par un événement.

13. Système de notification d'informations de service de longueur d'onde comprenant :
un site (71) selon l'une quelconque des revendications 7 à 12, et un site récepteur (72), dans lequel le site récepteur est configuré pour recevoir et mémoriser les informations de service de longueur d'onde.

14. Système selon la revendication 13, dans lequel
le site est configuré en outre pour recevoir un troisième message de protocole de gestion de liaison envoyé par un site précédent, et obtenir les informations de service de longueur d'onde depuis le troisième message de protocole de gestion de liaison et mémoriser les informations de service de longueur d'onde au niveau de la source de répartition optique ; puis transférer les informations de service de longueur d'onde de la source de répartition optique à l'arrivée de répartition optique en fonction des informations de répartition optique ; et insérer, au niveau de l'arrivée de répartition optique, les informations de service de longueur d'onde dans le message de protocole de gestion de liaison pour obtenir un premier message de protocole de gestion de liaison, puis envoyer, au niveau de l'arrivée de répartition optique, le premier message de protocole de gestion de liaison à un site suivant, de telle sorte que le site suivant obtienne et mémorise les informations de service de longueur d'onde qui se trouvent dans le premier message de protocole de gestion de liaison, et envoie les informations de service de longueur d'onde au site récepteur par le biais d'un second message de protocole de gestion de liaison généré par le site suivant.
